# EUROPÄISCHE PATENTSCHRIFT

(11) **EP 0 408 692 B1**
(45) Veröffentlichungstag und Bekanntmachung des Hinweises auf die Patenterteilung: **20.10.1993**
(21) Anmeldenummer: 90900131.5
(22) Anmeldetag: 20.11.1989
(51) Int. Cl.: B60T 8/44, B60T 8/32

(54) **BLOCKIERGESCHÜTZTE HYDRAULISCHE BREMSANLAGE**
ANTILOCK HYDRAULIC BRAKING SYSTEM
SYSTEME DE FREINAGE ANTIBLOCAGE HYDRAULIQUE

(30) Priorität: 19.12.1988 DE 3842669; 05.07.1989 DE 3922082
(43) Veröffentlichungstag der Anmeldung: 23.01.1991
(73) Patentinhaber: ITT Automotive Europe GmbH, 60488 Frankfurt (DE)
(72) Erfinder: LÜTTEKE, Harald, D-6365 Rosbach 1 (DE); BECK, Erhard, D-6100 Darmstadt (DE)
(86) Internationale Anmeldenummer: EP8901405
(87) Internationale Veröffentlichungsnummer: WO9006873

(56) Entgegenhaltungen:
- DE-A- 3 439 258
- DE-A- 3 627 000
- DE-A- 3 739 915
- GB-A- 2 183 763
- GB-A- 2 191 835
- US-A- 3 549 209
- PATENT ABSTRACTS OF JAPAN vol.11,No.146 (M-587) 13 May1987 & JP-A-61 282158 (TOYOTA) 12 December 1986

## Beschreibung

Die Erfindung bezieht sich auf eine blockiergeschützte hydraulische Bremsanlage nach dem Oberbegriff des Anspruchs 1.

Eine derartige Bremsanlage ist z.B. aus der DE-OS 36 27 000 bekannt. Diese Offenlegungsschrift zeigt eine Zweikreisbremsanlage mit einem Tandemhauptzylinder und einer Pumpe für jeden Bremskreis. Die Radbremszylinder stehen über je ein Einlaßventil mit der Druckleitung zur Pumpe bzw. der Bremsleitung zum Hauptbremszylinder und mit je einem Auslaßventil mit der Rücklaufleitung zum Vorratsbehälter in Verbindung. Das Einlaßventil ist normalerweise geöffnet, das Auslaßventil normalerweise geschlossen.

Während einer Bremsung wird das Drehverhalten der Räder laufend überwacht. Wenn eines der Räder droht zu blockieren, dann wird der Antrieb der Pumpe eingeschaltet und das Ein- und Auslaßventil des blockiergefährdeten Rades derart angesteuert, daß in den Radbremsen ein Druck eingestellt wird, der mit einem optimalen Schlupfwert des Rades korrelliert. Zum Senken des Druckes wird das Auslaßventil geöffnet und das Einlaßventil geschlossen. Zum Halten des Druckes sind beide Ventile geschlossen, während zur Drucksteigerung das Einlaßventil geöffnet und das Auslaßventil geschlossen ist.

Die Ein- und Auslaßventile sind elektromagnetisch angesteuerte Ventile mit einem Schließkörper, der auf einem Ventilsitz aufsitzt. Während einer ABS-Regelungsbremsung tritt an den Ventilen ein Druckgefälle in der Bremsflüssigkeit auf, das zu Regelgeräuschen führt, die vom Fahrer des Fahrzeuges als unangenehm empfunden werden.

Aus der JP-A-61-282158 ist eine Bremsanlage der im Oberbegriff genannten Art bekannt, die zur Reduzierung von Regelgeräuschen mit einem Differenzdruckbegrenzer versehen ist, der in einem Gehäuse drei Kammern (Steuerkammer, Einlaßkammer, Auslaßkammer) aufweist, wobei ein Durchlaß zwischen der Einlaß- und der Auslaßkammer mittels eines federkraftbeaufschlagten Ventilkörpers verschließbar ist. Die Steuerkammer steht mit der Radbremse, die Einlaßkammer mit der Hilfsdruckquelle und die Auslaßkammer über das Einlaßventil ebenfalls mit der Radbremse in Verbindung. Wirkungsmäßig parallel zum Differenzdruckbegrenzer angeordnet, befindet sich ein Rückschlagventil derart, daß beim Lösen des Bremspedals das in der Radbremse befindliche Druckmittel unabhängig von der Arbeitsstellung des Einlaßventils und des Differenzdruckbegrenzers ungehindert zum Hauptzylinder rückströmen kann. Der Differenzdruckbegrenzer zwischen der Hilfsdruckquelle und dem Einlaßventil bewirkt bei einem bestimmten Bremsflüssigkeitsdruck, der größer ist als der Druck, der der Kraft der Ventilfeder entspricht, das am Einlaßventil ein definiertes, konstantes Druckgefälle vorliegt, das durch die Ventilfeder bestimmt ist. Dieses Druckgefälle wird derart eingestellt, daß es wesentlich geringer ist, als das Druckgefälle, das üblicherweise bei einer Panik-ABS-Regelungsbremsung mit einer Bremsanlage ohne Differenzdruckbegrenzer auftritt. Es ist bekannt, daß die Regelgeräusche mit größer werdendem Druckgefälle zunehmen und dann besonders laut sind, wenn der Fahrer bei einer Panikbremsung mit ganzer Kraft auf das Bremspedal tritt. Geschieht das bei niedriger Blockiergrenze (z.B. auf Eis), so liegen die größten Druckgefälle und damit die höchsten Regelgeräusche vor. Hiervon ist das Einlaßventil besonders betroffen. Die Senkung des Druckgefälles am Einlaßventil hat also offensichtlich den Erfolg, daß die Regelgeräusche erheblich gesenkt werden. Jedoch erweist sich vorbeschriebene Bauanordnung infolge des relativ aufwendig bauenden Differenzdruckbegrenzers und des getrennt angeordneten Rückschlagventils als verbesserungswürdig.

Ferner ist aus der GB 2 183 763 A eine blockiergeschützte Bremsanlage bekannt, die über einen in einer Bohrung eines Ventilgehäuses dichtend geführten Ventilkörper verfügt, in dem sowohl in einem ersten Raum der Ventilsitz des Rückschlagventils und in einem zweiten Raum der Ventilsitz des Differenzdruckbegrenzers angeordnet ist. In jedem Raum ist jeweils eine ein Kugel-Schließglied belastende Druckfeder angeordnet. Eine weitere Druckfeder stützt sich zwischen dem Ventilgehäuse und dem Ventilkörper ab, so daß dieser in der Grundstellung eine hydraulische Verbindung zwischen dem Hauptzylinder und der Radbremse herstellt. Durch die Verwendung mehrerer toleranzbehafteter Druckfedern, sowie durch die räumliche Trennung der Kugelventilschließglieder bedarf es eines besonders lang und fertigungstechnisch kompliziert herzustellenden Ventilkörpers, dessen von den einzelnen Federkennlinien abhängiges Schaltverhalten zudem eine besondere Federauswahl erfordert.

Daher ist es die Aufgabe der Erfindung eine Bremsanlage zu schaffen, die sich durch einen besonders einfachen, kompakten, kostengünstigen und leicht herzustellenden Aufbau auszeichnet.

Diese Aufgabe wird erfindungsgemäß durch die den Patentanspruch 1 kennzeichnenden Merkmale gelöst.

Um zu einer kompakten Darstellung der notwendigen Ventile, nämlich des Differenzdruckbegrenzers und des Rückschlagventils zu gelangen, wobei die Ventilteile so ausgebildet sind, daß diese leicht bearbeitet werden können, wird vorgeschlagen, daß ein Ventilkörper sowohl den Ventilsitz des Differenzdruckbegrenzers als auch den Ventilsitz des Rückschlagventiles trägt.

Eine besonders einfache Gestaltung erhält man, wenn der Ventilkörper, der die beiden Ventilsitze trägt, in der Längsbohrung eines Gehäuses dichtend geführt ist und eine zentrale Kammer aufweist, die die Ventilkugeln aufnimmt.

Da die Ansprüche, die an die Dichtigkeit des Ventilsitzes des Rückschlagventiles gestellt sind, nicht sehr hoch sind, kann dieser Dichtsitz an einem Einsatzkörper ausgebildet sein, der in den Ventilkörper eingesteckt wird. Diese Konstruktion ermöglicht es auch, daß der Ventilsitz des Differenzdruckbegrenzers leicht bearbeitet werden kann.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand zweier Zeichnungen näher dargestellt und erläutert werden.

Es zeigen:
- Figur 1: das hydraulische Schaltbild einer zum Stand der Technik gehörenden Bremsanlage, wobei die Darstellung des Hauptzylinders im Schnitt erfolgt,
- Figur 2: die vorteilhafte Ausgestaltung eines Differenzdruckbegrenzers mit integriertem Rückschlagventil.

Die hydraulische Bremsanlage besteht aus einem Hauptbremszylinder 1, dem ein pneumatischer Verstärker 2 vorgeschaltet ist. Der pneumatische Verstärker 2 wird mittels eines Pedals 3 tätig. In der Längsbohrung 4 des Hauptbremszylinders 1 ist ein Schwimmkolben 5 und ein Druckstangenkolben 6 dichtend geführt. Sie begrenzen zwei Arbeitsräume 7 und 8 in der Bohrung 4 des Hauptbremszylinders 1. Sowohl der Druckstangenkolben 6 als auch der Schwimmkolben 5 weisen ein Zentralventil 9 auf, dessen Schließkörper 10 in der Grundposition des Kolbens mittels eines Stößels, der an einem gehäusefesten Anschlag liegt, vom Ventilsitz entfernt gehalten wird. Dadurch besteht eine Verbindung zwischen den Arbeitskammern 7 und 8 und dem Vorratsbehälter 11. Betätigt der Fahrer das Pedal 3, so wird mit Unterstützung durch den pneumatischen Verstärker 2 der Druckstangenkolben 6 in den Hauptbremszylinder hineingeschoben, wodurch das Zentralventil 9 schließt und Druckmittel aus der Arbeitskammer 8 in den angeschlossenen Bremskreis verdrängt wird. Als Folge verschiebt sich auch der Schwimmkolben 5, so daß auch aus der Arbeitskammer 7 Druckmittel verdrängt wird. Beide Arbeitskammern stehen über je eine Bremsleitung 12 mit den Radbremsen des Fahrzeuges in Verbindung, die mit einer Buchstabenkombination bezeichnet sind, wobei die folgenden Abkürzungen gewählt worden sind: V für vorne, H für hinten, L für links und R für rechts.

Die Bremsanlage beinhaltet weiterhin eine Doppelpumpe 13, die von einem Motor M angetrieben wird. Die Pumpen fördern aus dem Vorratsbehälter 11 über je eine Druckleitung 14 in die Bremsleitungen 12. In die Bremsleitung 12 bzw. in deren Zweigleitungen zu den Radbremsen ist je ein Einlaßventil 15 geschaltet, das elektromagnetisch betätigt und in der Grundstellung offen ist.

Die Radbremsen stehen weiterhin über eine Rücklaufleitung 16 mit dem Vorratsbehälter 11 in Verbindung, wobei in die Rücklaufleitungen bzw. in den Zweigleitungen je ein Auslaßventil 17 angesetzt ist, das ebenfalls elektromagnetisch betätigt, aber in stromlosem Zustand geschlossen ist.

Oberhalb der Einlaßventile 15, also zwischen dem Einlaßventil 15 und der Pumpe 13 bzw. dem Hauptbremszylinder 1 ist je ein Differenzdruckbegrenzer 18 eingeschaltet, dessen Steuerleitung 19 unmittelbar mit der jeweiligen Radbremse verbunden ist.

Parallel zum Einlaßventil 15 und dem Differenzdruckbegrenzer 18 ist ein Rückschlagventil 21 in eine BypassLeitung 20 geschaltet, das zur Radbremse hin sperrt.

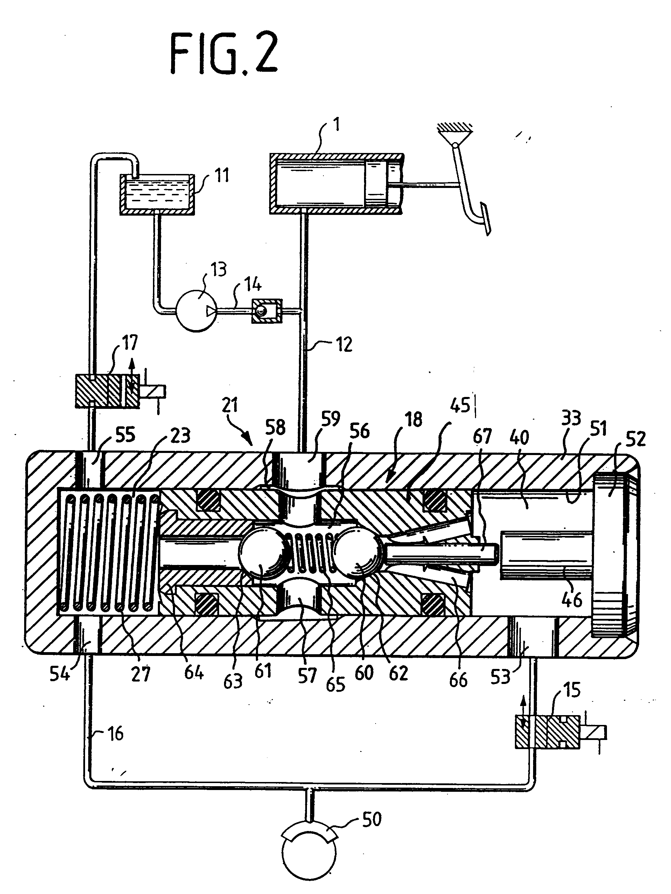

Im folgendem wird die Ausführung nach Fig. 2 beschrieben.

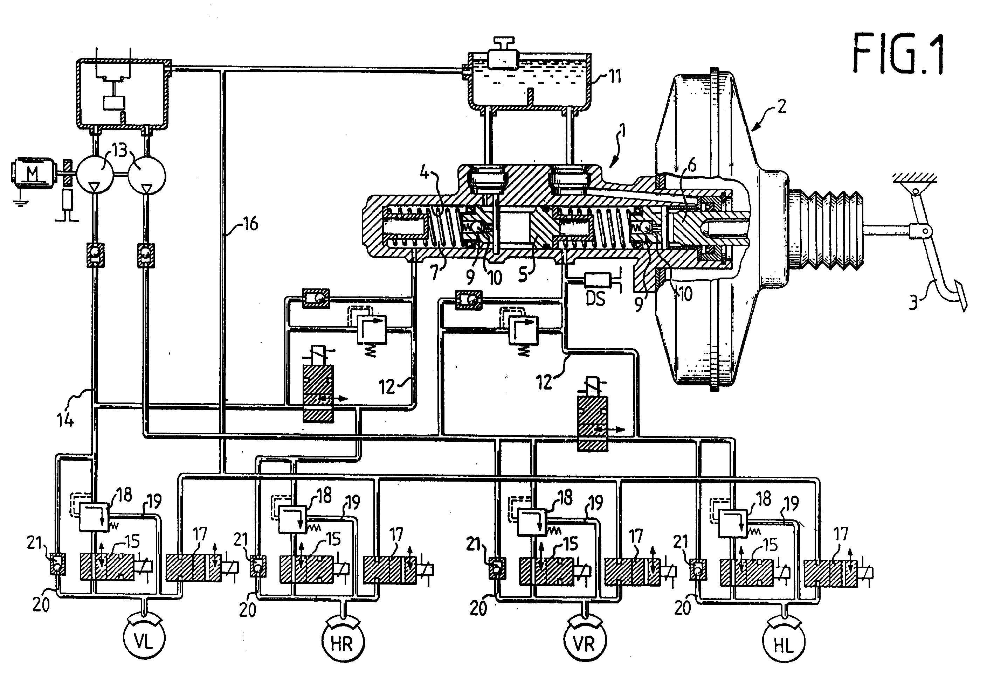

Die dargestellte Schaltung entspricht der Fig. 1, wobei der Differenzdruckbegrenzer 18 und das Rückschlagventil 21 in einem gemeinsamen Ventilgehäuse 33 angeordnet sind. Das Ventilgehäuse 33 weist eine Längsbohrung 51 auf, in der ein Ventilkörper 45 dichtend geführt ist. Der Ventilkörper 45 begrenzt mit seiner einen Stirnseite die Auslaßkammer 40 und mit seiner anderen Stirnseite die Steuerkammer 23. Die Steuerkammer 23 wird vom Boden des Ventilgehäuses 33 begrenzt, während die Auslaßkammer 40 von einem Verschlußstopfen 52 nach außen hin abgeschlossen ist. An die Auslaßkammer 40 ist über einen ersten Anschluß 53 die Radbremse 50 angeschlossen, wobei in das Leitungsstück zwischen dem Anschluß 53 und der Radbremse 50 das Einlaßventil 15 angeordnet ist. Die Steuerkammer 23 steht über ein Teilstück der Rücklaufleitung 16, die an den zweiten Anschluß 54 anschließt, unmittelbar mit der Radbremse 50 in Verbindung. Die Auslaßkammer 23 weist einen weiteren, dritten Anschluß 55 auf, an dem der Vorratsbehälter 11 angeschlossen ist. In dem Teilstück der Rücklaufleitung 10 zwischen dem dritten Anschluß 55 und dem Vorratsbehälter 11 ist das Auslaßventil 17 angeordnet.

Der Ventilkörper 45 weist einen zentralen Raum 56 auf, der über Querbohrungen 57 mit einer Ringnut 58 im Ventilgehäuse 33 in Verbindung steht. In die Ringnut 58 mündet ein vierter Anschluß 59, der mit der Pumpe 13 und dem Hauptbremszylinder 1 verbunden ist.

In dem zentralen Raum ist eine erste Ventilkugel 60 und eine zweite Ventilkugel 61 angeordnet. Die erste Ventilkugel 60 gehört zum Differenzdruckbegrenzer 18, die zweite Ventilkugel 61 zum Rückschlagventil 21. Die Ventilkugeln liegen jeweils an Ventilsitzen 62, 63 an, die dem zentralen Raum 21 zugewandt sind. Der erste Dichtsitz 62 gehört zum Differenzdruckbegrenzer 18, der zweite Ventilsitz 63 zum Rückschlagventil 21. Der erste Ventilsitz 62 ist unmittelbar am Ventilkörper 45 ausgebildet, während der zweite Ventilsitz 63 an einer Hülse 64 ausgebildet ist, die in axialer Richtung in den Ventilkörper 45 eingesteckt ist. Eine Haltefeder 65 ist zwischen den Ventilkugeln 60, 61 angeordnet und drückt sie auf die jeweils zugehörigen Ventilsitze. Die Verbindung zwischen dem zentralen Raum 56 und der Steuerkammer 23 ist über den Längskanal in der Hülse 64 hergestellt. Um den zentralen Raum 56 mit dem Auslaßraum 40 zu verbinden, sind Kanäle 66 vorgesehen. Diese verlaufen leicht schräg zur Längsachse des Ventilkörpers 45.

Ein Stößel 67 ist axial im Ventilkörper 45 geführt und liegt an der ersten Ventilkugel 60 an. Er ragt in die Auslaßkammer 40 und liegt dort einem Anschlag 46 gegenüber, der am Verschlußstopfen 17 ausgebildet ist.

Die in der Figur skizzierte Anlage arbeitet nach dem folgenden Schema.

Die Figur zeigt die gesperrte Position des Differenzdruckbegrenzers 18. In der Grundposition drückt die Steuerfeder 27, die in der Steuerkammer 23 angeordnet ist und sich einerseits am Gehäuse und andererseits am Ventilkörper 45 abstützt, diesen gemäß der Darstellung der Fig. nach rechts. Dadurch legt sich der Stößel 67 am Anschlag 46 an und hebt die erste Ventilkugel 60 von ihrem Ventilsitz 62 ab. Dadurch entsteht eine Druckmittelverbindung zwischen dem vierten Anschluß 59 und dem ersten Anschluß 53 und zwar über die Ringnut 58, der Querbohrung 57, der Einlaßkammer 56, den Kanälen 66 und der Auslaßkammer 40. Das aus dem Hauptbremszylinder 1 verdrängte Druckmittel gelangt über diesen Weg in die Radbremse 50.

Droht dieses Rad zu blockieren, so schaltet die Anlage in den Antiblockiermodus. Dies beinhaltet, daß der Antrieb der Pumpe 13 eingeschaltet wird und die Ventile 15 undl 7 so geschaltet werden, daß der Radbremse im Wechsel Druckmittel zugeführt und entnommen wird, so daß sich der Druck in der Radbremse auf einen Wert einstellt, der mit den übertragbaren Kräften zwischen Reifen und Fahrbahn harmoniert.

Solange die Anlage noch im Normalbremsmodus ist, sind die Drücke in den Kammern 40 und 23 identisch, da das Einlaßventil 15 geöffnet ist. Auf den Ventilkörper 45 wirkt nur die Kraft der Steuerfeder 27, so daß der Differenzdruckbegrenzer 18 stets geöffnet ist, unabhängig vom Druckniveau. Im Antiblockiermodus sinkt der Druck in den Radbremsen und ist stets kleiner als am vierten Anschluß 59 bzw. in der Auslaßkammer 40. Würde nämlich der Druck in der Steuerkammer 23 über den Druck am Anschluß 59, also dem Hauptbremszylinderdruck ansteigen, so würde das Rückschlagventil 21 öffnen und sofort einen Druckangleich bewirken. Sobald der Druck in der Steuerkammer 23 kleiner ist als in der Auslaßkammer 40, wird der Ventilkörper 45 gegen die Kraft der Steuerfeder 27 nach links geschoben, so daß die erste Ventilkugel 60 auf den zugehörigen Dichtsitz 62 aufsetzt und die Verbindung zwischen dem Hauptbremszylinder 1 und dem ersten Anschluß 53 sperrt. Sinkt nun auch der Druck in Auslaßkammer 40, weil das Auslaßventil 15 geöffnet wird, so schiebt die Steuerfeder 27 den Ventilkörper 45 wieder nach rechts, so daß der Differenzdruckbegrenzer 18 öffnet und Druckmittel von der Pumpe 13 zum Radbremszylinder gelangen kann. Praktisch stellt sich am Einlaßventil 15 ein Differenzdruck ein, der durch die Vorspannung der Feder 27 bestimmt ist. Durch diese Maßnahme wird bewirkt, daß die Bremsanlage geräuscharm arbeitet.

Die Kombination aus Differenzdruckbegrenzer 18 und Rückschlagventil 21 besteht aus wenigen Teilen, die leicht zu bearbeiten sind und leicht montiert werden können. Die Dichtsitze können unabhängig von der Bremsanlage überprüft werden.

## Patentansprüche

1. Blockiergeschützte, hydraulische Bremsanlage mit mindestens einer Radbremse (50) und einer mit einer Pumpe (13) versehenen Hilfsdruckquelle, die aus einem Vorratsbehälter (11) fördert, wobei in die Druckleitung zwischen der Hilfsdruckquelle und der Radbremse (50) ein Einlaßventil (15) eingesetzt und die Radbremse (50) über ein Auslaßventil (17) an eine in den Vorratsbehälter (11) einmündende Rücklaufleitung angeschlossen ist, mit einem in die Leitung zwischen der Hilfsdruckquelle (13) und dem Einlaßventil (15) eingefügten Differenzdruckbegrenzer (18), dessen Schließkörper (60) sowohl von der Kraft einer Feder (65) als auch vom Druck in der Radbremse (50) in einem die Leitung öffnenden Sinne beaufschlagt ist, mit einem zum Einlaßventil (15) und zum Differenzdruckbegrenzer (18) in einem Bypass eingesetzten und in Richtung des Hauptzylinders (1) öffnenden Rückschlagventil (21), mit einem pedalbetätigten Hauptbremszylinder (1) dessen Arbeitskammer (7,8) mittels einer Bremsleitung (12) an die Leitung zwischen der Hilfsdruckquelle (13) und dem Differenzdruckbegrenzer (18) angeschlossen ist, dadurch **gekennzeichnet**, daß in einem den Differenzdruckbegrenzer (18) und das Rückschlagventil (21) aufnehmenden Ventilkörper (45) ein zentraler Raum (56) angeordnet ist, der sowohl von einem Ventilsitz (62) des Differenzdruckbegrenzers (18) als auch von einem weiteren Ventilsitz (63) des Rückschlagventils (21) begrenzt ist, und daß eine zwischen einer ersten und einer weiteren Ventilkugel (60, 61) eingespannten Haltefeder (65) die beiden Ventilkugeln (60, 61) auf die Ventilsitze (62, 63) drückt.

2. Bremsanlage nach Anspruch 1, dadurch **gekennzeichnet,** daß der Ventilkörper (45) in einer Bohrung (51) eines Ventilgehäuses (33) dichtend geführt ist und mit seiner einen Stirnseite eine Auslaßkammer (40) und mit seiner anderen Stirnseite eine Steuerkammer (23) begrenzt, wobei die Auslaßkammer (40) über das Einlaßventil (15) mit der Radbremse (50) und die Steuerkammer (23) unmittelbar mit der Radbremse (50) verbunden ist.

3. Bremsanlage nach Anspruch 1 oder 2, dadurch **gekennzeichnet**, daß der im Ventilkörper (45) angeordnete zentrale Raum (56) über Querbohrungen (57) im Ventilkörper (45) mit dem Ausgang der Hilfsdruckquelle (13) in Verbindung steht.

4. Bremsanlage nach mindestens einem der vorhergehenden Ansprüche, dadurch **gekennzeichnet**, daß der Ventilsitz des Rückschlagventils (21) an einer Hülse (64) ausgebildet ist, die in den Ventilkörper (45) eingesteckt ist.

5. Bremsanlage nach Anspruch 2, dadurch **gekennzeichnet**, daß eine Steuerfeder (27) in der Steuerkammer (23) angeordnet ist, und daß die Steuerfeder (27) einerseits am Gehäuse und andererseits am Ventilkörper (45) abgestützt ist.

6. Bremsanlage nach Anspruch 3, dadurch **gekennzeichnet**, daß die Ventilkugel (60) des Differenzdruckbegrenzers (18) an einen Stößel (67) anlegbar ist, der wiederum an einem gehäusefesten Anschlag (46) anlegbar ist.

7. Bremsanlage nach Anspruch 6, dadurch **gekennzeichnet**, daß der gehäusefeste Anschlag (33) an einen Stopfen (17) angeformt ist, der die Bohrung (51) verschließt und den Auslaßraum (15) begrenzt.

## Claims

1. An anti-lock hydraulic brake system comprising at least one wheel brake (50) and an auxiliary pressure source furnished with a pump (13) supplying fluid out of a reservoir (11), an inlet valve (15) being interposed in the pressure line between the auxiliary pressure source and the wheel brake (50), and the wheel brake (50), through an outlet valve (17), being connected to a return line opening into the reservoir (11), comprising a differential pressure limiter (18) arranged in the line between the auxiliary pressure source (13) and the inlet valve (15), its closure member (60) being acted upon both by the force of a spring (65) and by the pressure in the wheel brake (50) in a way opening the line, comprising a check valve (21) inserted in a bypass line and opening towards the inlet valve (15) and the differential pressure limiter (18) and in the direction of the master cylinder (1), comprising a pedal-operated master brake cylinder (1) whose working chamber (7, 8) is connected by way of a brake line (12) to the line between the auxiliary pressure source (13) and the differential pressure limiter (18),
**characterized** in that a valve body (45) accommodating the differential pressure limiter (18) and the check valve (21) houses a central chamber (56) which is confined both by a valve seat (62) of the differential pressure limiter (18) and by another valve seat (63) of the check valve (21), and in that a holding spring (65) clamped in between a first and another valve ball (60, 61) presses the two valve balls (60, 61) on the valve seats (62, 63).

2. A brake system as claimed in claim 1,
**characterized** in that the valve body (45) is sealingly guided in a bore (51) of a valve housing (33) and, with its one front side, confines an oulet chamber (40) and, with its other front side, confines a control chamber (23), with the outlet chamber (40) communicating with the wheel brake (50) through the inlet valve (15), and the control chamber (23) being directly connected to the wheel brake (50).

3. A brake system as claimed in claim 1 or 2,
**characterized** in that the central chamber (56) arranged in the valve body (45) is in communication with the outlet of the auxiliary pressure source (13) through transverse bores (57) in the valve body (45).

4. A brake system as claimed in at least one of the preceding claims,
**characterized** in that the valve seat of the check valve (21) is formed on a sleeve (64) which is inserted into the valve body (45).

5. A brake system as claimed in claim 2,
**characterized** in that a control spring (27) is arranged in the control chamber (23), and in that the control spring (27), on the one hand, is supported on the housing and, on the other hand, is supported on the valve body (45).

6. A brake system as claimed in claim 3,
**characterized** in that the valve ball (60) of the differential pressure limiter (18) can be placed in abutment with a plunger (67) which, in turn, can be placed in abutment with a stop (46) fixed to the housing.

7. A brake system as claimed in claim 6,
**characterized** in that the stop (33) fixed to the housing is formed on a plug (17) which closes the bore (51) and confines the outlet chamber (15).

## Revendications

1. Système de freinage hydraulique antiblocage des roues comprenant au moins un frein de roue (50) et une source de pression auxiliaire pourvue d'une pompe (13) puisant dans un réservoir (11), une valve (15) d'admission étant installée dans la conduite de pression comprise entre la source de pression auxiliaire et le frein de roue (50), et le frein de roue (50) étant raccordé, par l'intermédiaire d'une valve (17) d'échappement, à une conduite de retour débouchant dans le réservoir (11), un limiteur (18) de différence de pression étant intercalé dans la conduite, entre la source de pression auxiliaire (13) et la valve (15) d'admission, le corps obturateur (60) de ce limiteur de pression étant soumis à l'action de la force d'un ressort (65) et à celle de la pression régnant dans le frein de roue (50), cette action allant dans le sens d'une ouverture de la conduite, et comprenant un clapet antiretour (21) installé dans un passage de dérivation, parallèlement à la valve (15) d'admission et au limiteur (18) de différence de pression, s'ouvrant en direction du maître-cylindre (1) de freinage, comprenant un maître-cylindre (1) de freinage actionné par une pédale, la chambre de travail (7, 8) du maître-cylindre étant raccordée, par l'intermédiaire d'une conduite (12) de frein, à la conduite comprise entre la source de pression auxiliaire (13) et le limiteur (18) de différence de pression,
caractérisé en ce qu'une chambre centrale (56) est aménagée dans un corps (45) de valve recevant le limiteur (18) de différence de pression et le clapet antiretour (21), la chambre étant délimitée par un siège (62) de clapet du limiteur (18) de différence de pression et par un autre siège (63) de clapet du clapet antiretour (21), et en ce qu'un ressort (65) de maintien serré entre une première bille et une seconde bille (60, 61) de clapet sollicite les deux billes (60, 61) de clapet sur leurs sièges (62, 63) de clapet.

2. Système de freinage selon la revendication 1, caractérisé en ce que le corps (45) de valve est guidé de façon étanche dans un alésage (51) ménagé dans un carter (33) de valve, et en ce que l'une de ses faces frontales délimite une chambre (40) d'échappement, et que son autre face frontale délimite une chambre (23) de commande, la chambre (40) d'échappement étant reliée au frein de roue (50), par l'intermédiaire de la valve (15) d'échappement, et la chambre (23) de commande étant reliée directement au frein de roue (50).

3. Système de freinage selon l'une des revendications 1 ou 2, caractérise en ce que la chambre centrale (56) aménagée dans le corps (45) de valve communique, par l'intermédiaire de passages transversaux (57) ménagés dans le corps (45) de la valve, avec la sortie de la source de pression auxiliaire (13).

4. Système de freinage selon l'une des revendications précédentes, caractérisé en ce que le siège de clapet du clapet antiretour (21) est réalisé dans une douille (64) qui est insérée dans le corps (45) de la valve.

5. Système de freinage selon la revendication 2, caractérisé en ce qu'un ressort (27) de commande est agencé dans la chambre (23) de commande, et en ce que le ressort (27) de commande s'appuie d'un côté sur le carter et de l'autre côté sur le corps (45) de la valve.

6. Système de freinage selon la revendication 3, caractérisé en ce que la bille (60) de clapet du limiteur (18) de différence de pression peut se placer en appui sur un poussoir (67) qui peut à son tour être placé en appui sur une butée fixe (46) du carter.

7. Système de freinage selon la revendication 6, caractérisé en ce que la butée fixe (33) du carter est formée sur un bouchon (17) obturant l'alésage (51) et délimitant la chambre (15) d'échappement.
